**Europäisches Patentamt**

**European Patent Office**

**Office européen des brevets**

(19)

(11) Veröffentlichungsnummer: **0 091 697**
**B1**

(12) **EUROPÄISCHE PATENTSCHRIFT**

(45) Veröffentlichungstag der Patentschrift:
07.01.87

(51) Int. Cl.⁴: **B 23 C 3/06**

(21) Anmeldenummer: **83103577.9**

(22) Anmeldetag: **13.04.83**

(54) Wirbelgerät.

(30) Priorität: **14.04.82 DE 3213740**

(43) Veröffentlichungstag der Anmeldung:
**19.10.83 Patentblatt 83/42**

(45) Bekanntmachung des Hinweises auf die Patenterteilung:
**07.01.87 Patentblatt 87/2**

(84) Benannte Vertragsstaaten:
**AT DE FR GB IT**

(56) Entgegenhaltungen:
**DE - A - 1 552 803**
**GB - A - 945 679**
**US - A - 2 553 669**
**US - A - 3 867 868**

(73) Patentinhaber: **Oerlikon-Boehringer GmbH, Stuttgarter Strasse 50 Postfach 220, D-7320 Göppingen (DE)**

(72) Erfinder: **Berbalk, Hermann, Maschinenbauing. grad., Liebensteinstrasse 7, D-7320 Göppingen (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

## Beschreibung

Die Erfindung betrifft ein Wirbelgerät entsprechend dem Oberbegriff des Anspruchs 1.

Wirbelgeräte können z.B. in Wirbelmaschinen mit exzentrisch gelagerter Frässpindel zur Aufnahme von Aussenfräsern und dergleichen zur Bearbeitung von ovalen Wangenformen an Kurbelwellen oder sonstigen aussenliegenden runden oder unrunden Werkstückkonturen verwendet werden.

Es ist bekannt, derartige Werkstückkonturen im Kopierverfahren durch Drehen oder Fräsen zu bearbeiten. Auch ist es bekannt, dass derartige Konturen jedoch nur in beschränktem Masse auf Wirbelmaschinen mit Innenfräser bearbeitet werden können.

Bei der Bearbeitung durch Drehen im Kopierverfahren dreht sich das Werkstück, und das Werkzeug wird entsprechend der Kopiereinrichtung hin- und herbewegt. Die Bearbeitung dauert relativ lange, da die Zerspanleistung gering ist. Beim Fräsen mit Aussenfräser wird das Werkstück um 360° gedreht, und der Aussenfräser, der in einem Frässchlitten gelagert ist, wird in Planrichtung zur Kurbelwellenachse kopier-oder auch NC-gesteuert zugeführt.

Die grossen, auf die Kurbelwelle wirkenden Zerspanungskräfte bedürfen einer sehr guten Werkstückabstützung zur Aufnahme der auftretenden Radial- und Biegekräfte. Eine derartige Abstützung muss um so mehr vorgesehen werden, je geringer der Werkstückdurchmesser und je labiler das zu bearbeitende Werkstück ist.

Eine sichere und stabile Abstützung am drehenden Werkstück insbesondere bei Kurbel- und Nokkenwellen ist problematisch. Bearbeitungsungenauigkeiten, Rattern und damit Schneidenbruch der Werkzeuge sind oftmals die Folge. Bei der Bearbeitung von ovalen Konturen mit Innenfräser, wie etwa bei der DE-A-15 52 803, können flachgekrümmte bzw. gerade Konturen von Seitenwangen bzw. Nocken nicht bearbeitet werden, da die Grösse des Krümmungsradius der bearbeiteten Kontur vom Innendurchmesser des Werkzeugs abhängt. Doch auch die Verwendung von aussenverzahnten, anstelle von innenverzahnten Fräswerkzeugen alleine ermöglicht noch nicht die Herstellung von beliebigen flachgekrümmten Flächen, da zu diesem Zweck noch zusätzlich eine überlagerte, geradlinige Vorschubbewegung, quer zur Werkstücklängsachse, notwendig ist, und nicht nur die bekannte Einstellbewegung.

Der Erfindung liegt die Aufgabe zugrunde, die Bearbeitung von Werkstücken mit ebenen, flach gekrümmten oder kreisförmigen Konturen nach dem Wirbelprinzip bei stillstehendem Werkstück auf möglichst wirtschaftliche Weise möglichst unabhängig vom Krümmungsradius und der Kontur der zu bearbeitenden Fläche zu erreichen, indem das Werkzeug auf einer Äquidistanten zur zu bearbeitenden Kontur geführt wird.

Gelöst wird diese Aufgabe gemäss der Erfindung durch die im kennzeichnenden Teil des Anspruchs 1 angegebenen Merkmale. Zweckmässige Ausgestaltungen der Erfindung ergeben sich aus den Unteransprüchen.

Durch die Anordnung des Wirbelkreisels an der zur Aussenexzenterscheibe relativ verstellbaren Innenexzenterscheibe und gleichzeitige Geradführung des die beiden Exzenterscheiben aufnehmenden Gehäuses des Wirbelgerätes kann sich der Mittelpunkt des Wirbelkreisels auf einer Bahn bewegen, die sich aus überlagerten bogenförmigen und geraden Elementen zusammensetzt. Bei entsprechenden relativen Abmessungen kann der Mittelpunkt des Wirbelkreisels auf einer Äquidistanten zu auch komplizierten Aussenkonturen des zu bearbeitenden Werkstückes geführt werden.

Der Wirbelkreisel kann als Werkzeugträger für Aussen- und Innenfräser, Einzelfräser, Satzfräser, Schleifscheiben usw. ausgebildet sein.

Der Antrieb der Exzenterscheiben und des die sie aufnehmenden Gehäuses kann NC-gesteuert sein und von unabhängig arbeitenden Gleichstrommotroren aus erfolgen.

Eine besonders einfache Ausführungsform ergibt sich, wenn die Aussenexzenterscheibe angetrieben und die Innenexzenterscheibe sich zusammen mit der Aussenexzenterscheibe in fester Relativlage zu dieser dreht. In diesem Falle ist das Gehäuse zweckmässigerweise auf einer horizontalen Geraden senkrecht zur Werkstückachse verschiebbar, um die Vorschubbewegung in dieser Richtung zu ermöglichen. Eine derartige Ausführungsform ist besonders zur Bearbeitung von Kurbelwellen geeignet.

Aufgrund der vorgeschlagenen Ausbildung ergibt sich die Möglichkeit der Bearbeitung ebener, flachgekrümmter und kreisförmiger Werkstückkonturen von z. B. dünnen und langen Werkstükken wie Kurbel- und Nockenwellen. Eine gute und sichere Abstützung des Werkstückes ist möglich, da das Werkstück während der Bearbeitung stillsteht, so dass eine hohe Zerspanleistung, eine hohe Bearbeitungsgenauigkeit und niedrige Kosten gewährleistet sind.

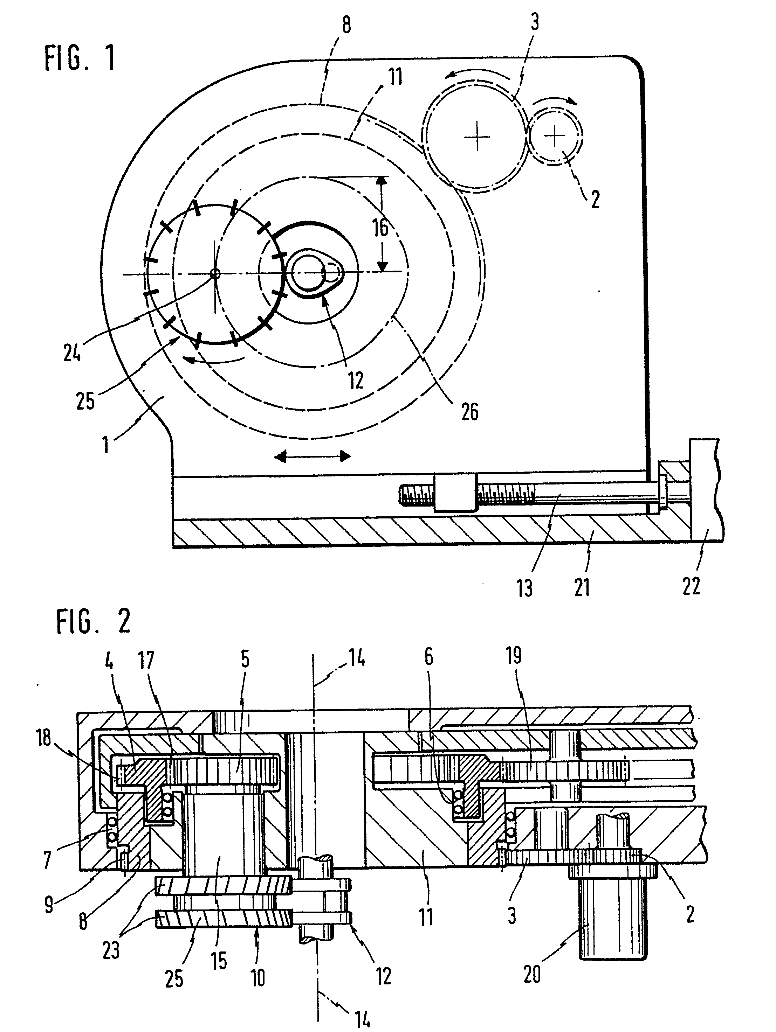

Die Erfindung wird nachstehend anhand der Fig. 1 und 2 beispielsweise erläutert. Es zeigt:

Fig. 1 eine Seitenansicht des Wirbelgerätes in Anwendung auf eine Kurbelwellen-Wirbelmaschine und

Fig. 2 einen Horizontalschnitt des Wirbelgerätes.

Das Wirbelgerät besteht aus einem Wirbelkreisel in Form eines Fräswerkzeuges 10, das zur Bearbeitung der Seitenwangen einer Kurbelwelle 12 zwei Werkzeugträger 23 hat, an deren Aussenumfang Aussenfräser als Werkzeuge 25 angeordnet sind. Die beiden Scheiben 23 sitzen an einer Spindel 15, die in einer Innenexzenterscheibe 11 drehbar gelagert sind.

Die Innenexzenterscheibe 11 ist in einer Aussenexzenterscheibe 8 angeordnet und kann in ihrer relativen Lage zu dieser durch nicht gezeigte Einrichtungen verstellt und arretiert werden.

Die Aussenexzenterscheibe 8 ist im Gehäuse 1 des Wirbelgerätes mittels eines Lagers 7 zentrisch zur Achse 14 der zu bearbeitenden Kurbelwelle 12 drehbar gelagert.

Die Aussenexzenterscheibe 8 hat eine Aussenverzahnung 9, in die ein Zwischenzahnrad 3 eingreift, das mit einem Ritzel 2 kämmt, das von
einem Gleichstrommotor 20 angetrieben wird.

Der Antrieb der Spindel 15 und damit des Wirbelkreisels 10 erfolgt über ein an der Spindel 15
sitzendes Zahnrad 5, das in die Innenverzahnung
17 eines Zahnringes 4 eingreift, der mittels eines
Lagers 6 an der Innenexzenterscheibe 11 drehbar
gelagert ist und eine Aussenverzahnung 18 aufweist, die mit einem Zwischenzahnrad 19 in Eingriff steht, das von einem nicht gezeigten Getriebe
angetrieben wird.

Das Gehäuse 1 ist zusammen mit den Innen-
und Aussenexzenterscheiben 11, 8 auf einem Gestell 21 horizontal und senkrecht zur Werkstückachse 14 mittels eines Kugelgewindetriebs 13 verschiebbar. Der Antrieb in der Verschieberichtung
erfolgt durch einen Gleichstrommotor 22.

Durch geeignete Steuerung der Gleichstrommotoren 20 und 22 kann der Mittelpunkt 24 der
Werkzeugträger einer in Fig. 1 strichpunktiert gezeigten Äquidistanten 26 zur Aussenkontur der
Kurbelwellenseitenwangen bewegt werden.

Der Abstand 16 (Fig. 1) des Wirbelkreisels 10
von der Achse 14 der Kurbelwelle kann durch
Änderung der relativen Lage der beiden Exzenterscheiben eingestellt werden.

Die Bearbeitung des Werkstückes 12 erfolgt dadurch, dass in der Durchtaktstellung, d.h. beim
Verschieben des Gehäuses 1 in Axialrichtung das
Gehäuse 1 so weit vom Werkstück zurückgezogen
wird, dass der Wirbelkreisel 10 beim Längsverschieben mit der Kurbelwelle nicht in Berührung
kommt.

Ist die gewünschte Axialposition angefahren,
wird der Wirbelkreisel plan auf Mass eingestochen. Nun wird der Werkzeugmittelpunkt 24 auf
einer Equidistanten um das Werkstück geführt.
Hierbei werden die beiden Gleichstrommotoren
20 und 22 durch NC-Steuerung und entsprechende
Programmierung entsprechend der gewünschten
Äquidistanten angesteuert. Bei diesem Bewegungsablauf bestimmt der Kugelgewindetrieb 13
die Geradführung und die Aussenexzenterscheibe
8 die kreisbogenförmige Führung des Mittelpunktes 24 des Wirbelkreisels 10.

**Patentansprüche**

1. Wirbelgerät zur Bearbeitung langgestreckter
Werkstücke, bestehend aus einem scheibenförmigen Werkzeugträger (23), der an einer Innenexzenterscheibe (11), diese an einer antreibbaren
Aussenexzenterscheibe (8) und diese wiederum
an einem Gehäuse (1) drehbar gelagert ist, wobei
beide Exzenterscheiben in ihrer gegenseitigen
Lage verstell- und antreibbar sind, die Innen- und
Aussenexzenterscheiben ein zu bearbeitendes
Werkstück (12) umgeben und der Werkzeugträger
(23) um das Werkstück herum führbar ist, dadurch
gekennzeichnet, dass der scheibenförmige Werkzeugträger (23) zur Bearbeitung von ebenen,
flachgekrümmten oder kreisförmigen, um die
Werkstückachse (14) liegenden Werkstückflächen
die Werkzeuge (25) am Aussenumfang trägt und
an einer exzentrisch an der Innenexzenterscheibe
(11) drehbar gelagerten Spindel (15) sitzt, und
dass das Gehäuse (1) zusammen mit den Aussen-
und Innenexzenterscheiben (8, 11) längs wenigstens einer Geraden senkrecht zur Werkzeugträger-Drehachse verschiebbar ist.

2. Wirbelgerät nach Anspruch 1, dadurch gekennzeichnet, dass die Gerade horizontal verläuft.

3. Wirbelgerät nach Anspruch 1 oder 2, dadurch
gekennzeichnet, dass die Aussenexzenterscheibe
(8) antreibbar ist, und dass die gegenseitige Lage
der Innen- und Aussenexzenterscheiben (11, 8)
während der Bearbeitung festliegt.

4. Wirbelgerät nach einem der Ansprüche 1 bis
3, dadurch gekennzeichnet, dass die Aussenexzenterscheibe (8) eine Aussenverzahnung (9) aufweist, in die ein angetriebenes Zwischenzahnrad
(3) eingreift.

5. Wirbelgerät nach einem der Ansprüche 1 bis
4, gekennzeichnet durch einen am Innenexzenter
(11) drehbar gelagerten Zahnring (4) mit Innen-
und Aussenverzahnung (17, 18), der mittels der
Aussenverzahnung (18) über ein Zwischenzahnrad (19) angetrieben ist und in dessen Innenverzahnung (17) ein am Wirbelkreisel (10) sitzendes
Zahnrad (5) eingreift.

6. Wirbelgerät nach Anspruch 4, dadurch gekennzeichnet, dass die Aussenexzenterscheibe
(8) von einem Gleichstrommotor (20) angetrieben
ist.

7. Wirbelgerät nach einem der Ansprüche 1 bis
6, dadurch gekennzeichnet, dass das Gehäuse (1)
mittels eines Kugelgewindetriebs (13) horizontal
verschiebbar ist.

8. Wirbelgerät nach Anspruch 7, dadurch gekennzeichnet, dass der Antrieb des Gehäuses (1)
mittels eines Gleichstrommotors (22) erfolgt.

9. Wirbelgerät nach einem der Ansprüche 1 bis
8, dadurch gekennzeichnet, dass der Wirbelkreisel (10) an einer exzentrisch an der Innenexzenterscheibe (11) drehbar gelagerten Spindel (15)
sitzt.

10. Wirbelgerät nach Anspruch 9, dadurch gekennzeichnet, dass der Wirbelkreisel (10) zur
gleichzeitigen Bearbeitung von zwei Seitenwangen einer Kurbelwelle (12) zwei Aussenfräser (25)
tragende Scheiben (23) aufweist.

11. Wirbelgerät nach einem der Ansprüche 1 bis
10, dadurch gekennzeichnet, dass der Antrieb der
Innen- und Aussenexzenterscheiben (11, 8) und
die Verschiebbarkeit des Gehäuses (1) NC-
gesteuert sind.

12. Wirbelgerät nach einem der Ansprüche 1 bis
11, dadurch gekennzeichnet, dass der Wirbelkreisel (10) zur gleichzeitigen Bearbeitung von zwei
Seitenwangen einer Kurbelwelle (12) am Aussenumfang Aussenfräser tragende Scheiben (23) aufweist.

13. Wirbelgerät nach Anspruch 12, dadurch gekennzeichnet, dass die Scheiben (23) an einer exzentrisch an der Innenexzentrerscheibe drehbar gelagerten Spindel (15) sitzen.

**Claims**

1. Contour milling apparatus for milling elongate workpieces, comprising a disc-shaped tool carrier (23), which is rotatably mounted on an inner eccentric disc (11), itself rotatably mounted on a drivable outer eccentric disc (8) which in turn is rotatably mounted on a housing (11), in which both eccentric discs are adjustable and drivable in their respective positions, the inner and outer eccentric discs surround a workpiece (12) to be machined and the tool carrier (23) can be guided around the workpiece, characterised in that the disc-shaped tool carrier (23) carries on its outer periphery the tools (25) for working upon plane, curved or circular workpiece surfaces lying around the workpiece axis (14) and is mounted on a spindle (15) rotatably mounted eccentrically on the inner eccentric disc (11) and that the housing (11), together with the outer and inner eccentric discs (8, 11) is movable along at least one straight line perpendicular to the rotational axis of the tool carrier.

2. Contour milling apparatus according to claim 1, characterised in that the straight line extends horizontally.

3. Contour milling apparatus according to claim 1 or 2, characterised in that the outer eccentric disc (8) is drivable and that the respective positions of the inner and outer eccentric discs (11, 8) are established during the milling operation.

4. Contour milling apparatus according to any of claims 1 to 3, characterised in that the outer eccenctric disc (8) has external teeth (9) with which a driven intermediate wheel (3) engages.

5. Contour milling apparatus according to any of claims 1 to 4, characterised by a gear ring (4) with inner and outer teeth (17, 18), which is rotatably mounted on the inner eccentric disc (11) and is driven by means of the external teeth (18) through an intermediate wheel (19) and in the inner teeth (17) of which a toothed wheel (5) mounted on the contour miller (10) engages.

6. Contour milling apparatus according to claim 4, characterised in that the outer eccentric disc (8) is driven by a direct current motor (20).

7. Contour milling apparatus according to any of claims 1 to 6, characterised in that the housing (1) is horizontally movable by means of a recirculating ball drive (13).

8. Contour milling apparatus according to claim 7, characterised in that the drive of the housing (1) is effected by means of a direct current motor (22).

9. Contour milling apparatus according to any of claims 1 to 8, characterised in that the contour miller (10) is mounted on a spindle (15) rotatably mounted eccentrically on the inner eccentric disc (11).

10. Contour milling apparatus according to claim 9, characterised in that the contour miller (10) has two discs (23) carrying external cutters (25) for simultaneously machining two side cheeks of a crankshaft (12).

11. Contour milling apparatus according to any of claims 1 to 10, characterised in that the drive of the inner and the outer eccentric discs (11, 8) and the movement of the housing (11) are numerically controlled.

12. Contour milling apparatus according to any of claims 1 to 11, characterised in that the contour miller (10) has discs (23) carrying exterior cutters on their outer periphery for simultaneously machining two side cheeks of a crankshaft (1).

13. Contour milling apparatus according to claim 12, characterised in that the discs (23) are mounted on a spindle (15) rotatably mounted eccentrically on the inner eccentric disc.

**Revendications**

1. Appareil à fraiser circulairement, permettant l'usinage des pièces longues, comportant un porte-outils (23) en forme de disque logé sur un excentrique intérieur (11) de façon à pouvoir tourner, cet excentrique (11) étant logé, de façon à pouvoir tourner, sur un excentrique entraîné extérieur (8) qui est logé, de façon à pouvoir tourner, dans un bâti (1), les deux excentriques de l'appareil pouvant être entraînés et leurs positions respectives réglées, les excentriques intérieur et extérieur enveloppant une pièce (12) à usiner et le porte-outil (23) pouvant suivre le contour de la pièce à usiner, caractérisé par le fait que le porte-outils (23) en forme de disque, destiné à usiner des surfaces planes, incurvées à grand rayon de courbure, ou circulaires, coaxiales à l'axe (14) de la pièce à usiner, porte les outils (25) sur sa périphérie et est monté sur une broche (15) excentrée, tournant sur l'excentrique intérieur (11), et par le fait que le bâti (1), avec les excentriques extérieur et intérieur (8, 11), se déplace le long d'au moins une ligne droite perpendiculaire à l'axe de rotation du porte-outils.

2. Appareil selon la revendication 1, caractérisé par le fait que la ligne droite est horizontale.

3. Appareil selon la revendication 1 ou 2, caractérisé par le fait que l'excentrique extérieur (8) peut être entraîné, et que la position relative des excentriques intérieur et extérieur (11, 8) est fixe pendant l'opération d'usinage.

4. Appareil selon une des revendications 1 à 3, caractérisé par le fait que l'excentrique extérieur (8) comporte une denture externe (9) dans laquelle s'engrène un pignon intermédiaire entraîné (3).

5. Appareil selon une des revendications 1 à 4, caractérisé par le fait qu'une couronne dentée (4) tournant sur l'excentrique intérieur (11) est munie d'une denture interne et externe (17, 18), et entraînée par l'intermédaire de sa denture externe (18) et d'un pignon intermédiaire (19), et qu'un pignon (5) disposé sur la toupie (10) de tourbillonnement est en engrènement avec la denture interne (17) de la couronne.

6. Appareil selon la revendication 4, caractérisé par le fait que l'excentrique extérieur (8) est entraîné par un moteur électrique (20) à courant continu.

7. Appareil selon une des revendications 1 à 6, caractérisé par le fait que le bâti (1) peut être déplacé horizontalement au moyen d'un entraînement (13) à vis à billes.

8. Appareil selon la revendication 7, caractérisé par le fait que l'entraînement du bâti (1) se fait au moyen d'un moteur électrique (22) à courant continu.

9. Appareil selon une des revendications 1 à 8, caractérisé par le fait que la toupie (10) de tourbillonnement est montée sur une broche (15) excentrée tournant sur l'excentrique intérieur (11).

10. Appareil selon la revendication 9, caractérisé par le fait qu'afin de permettre l'usinage simultané de deux faces latérales des plateaux-manivelles d'un vilebrequin (12), la toupie (10) de tourbillonnement est munie de deux disques porte-outils (23) portant les outils (25) de fraisage externe.

11. Appareil selon une des revendications 1 à 10, caractérisé par le fait que l'entraînement des excentriques intérieur et extérieur (11, 8), ainsi que le déplacement du bâti (1), sont contrôlés par une commande numérique.

12. Appareil selon une des revendications 1 à 11, caractérisé par le fait qu'afin de permettre l'usinage simultané de deux faces latérales des plateaux-manivelles d'un vilebrequin (12), la toupie (10) de tourbillonnement est munie de disques porte-outils (23) portant les outils de fraisage externe sur leur périphérie.

13. Appareil selon la revendication 12, caractérisé par le fait que les disques porte-outils (23) sont montés sur une broche (15) excentrée tournant sur l'excentrique intérieur.

0 091 697

FIG. 1

FIG. 2

7